# EUROPEAN PATENT APPLICATION

(11) **EP 1 826 046 A2**
(43) Date of publication of application: **29.08.2007**
(21) Application number: 07250503.5
(22) Date of filing: 07.02.2007
(51) Int. Cl.: B60J 5/04

(54) **Carrier plate with trim receivers**

(30) Priority: 22.02.2006 US 359735
(71) Applicant: ArvinMeritor Technology, LLC, Troy, Michigan 48084 (US)
(72) Inventor: Santhosh, Kumar Karumuri, Inkster, Michigan 48141 (US); Everadrdo, Andres Hernandez, Shelby Township, Michigan 48316 (US)
(74) Representative: Jones, John Bryn

(57) **Abstract**

A carrier plate (16) for a window regulator assembly (10) includes a trim receiver (20) that cooperates with a door trim connector (22) to attach a piece of door trim (24) directly to the carrier plate. The trim receiver and carrier plate are formed together as one-piece from a plastic material. The trim receiver includes an anti-rattle member (44) that engages the door trim connector to reduce noise.

## Description

### TECHNICAL FIELD

A window regulator carrier plate includes a trim receiver that allows a piece of door trim to be directly attached to the window regulator carrier plate.

### BACKGROUND OF THE INVENTION

A window regulator assembly is used in a vehicle door to move a window between an open position and a closed position. The window regulator assembly is comprised of various components that are supported on a carrier plate. The carrier plate is mounted within a vehicle door and is attached to an inner door structure formed from sheet metal. Subsequently, pieces of door trim are attached to the sheet metal that forms the inner door structure.

Attaching the pieces of door trim to the inner door structure can be a difficult and time consuming process. Further, additional mounting challenges are presented for attaching pieces of door trim to the sheet metal due to the position of the carrier plate and associated window regulator components. Thus, there is a need for a more efficient and cost effective method and apparatus for attaching door trim in a vehicle door.

### SUMMARY OF THE INVENTION

A carrier plate for a window regulator assembly includes a trim receiver that cooperates with a trim connector to attach a piece of door trim directly to the carrier plate. This eliminates the need to connect door trim to inner door structures formed of sheet metal, resulting in a more efficient assembly operation.

Preferably, the trim receiver and carrier plate are formed together as one-piece from a plastic material. The trim receiver is comprised of a plurality of walls that are positioned to form a cavity. The trim connector is received within the cavity to secure the door trim to the carrier plate.

Also, the trim receiver preferably includes an anti-rattle member that engages the door trim connector to reduce noise. The anti-rattle member comprises a finger that extends from a base end formed as part of the trim receiver to a distal end that is unsupported. When the trim connector is inserted into the trim receiver, the anti-rattle member is pushed against the trim connector, which results in reduced rattling noise at the connection interface between the door trim and carrier plate.

These and other features of the present invention can be best understood from the following specification and drawings, the following of which is a brief description.

### BRIEF DESCRIPTION OF THE DRAWINGS

Figure 1 comprises a schematic block diagram of a window regulator and associated window.
Figure 2 is a perspective view of a carrier plate incorporating the subject invention.
Figure 3 is an exploded view of a carrier plate and door trim connector incorporating the subject invention.
Figure 4 is a perspective view of the door trim connector just prior to insertion in a trim receiver formed on the carrier plate.
Figure 5 is a cross-sectional view of the door trim connector installed within the trim receiver.
Figure 6 is a cross-sectional view of an anti-rattle member engaged against the door trim connector.
Figure 7 is an alternate embodiment of a carrier plate incorporating the subject invention.
Figure 8 shows one example of a seal assembly for the carrier plate around the trim receiver.

### DETAILED DESCRIPTION OF THE PREFERRED EMBODIMENT

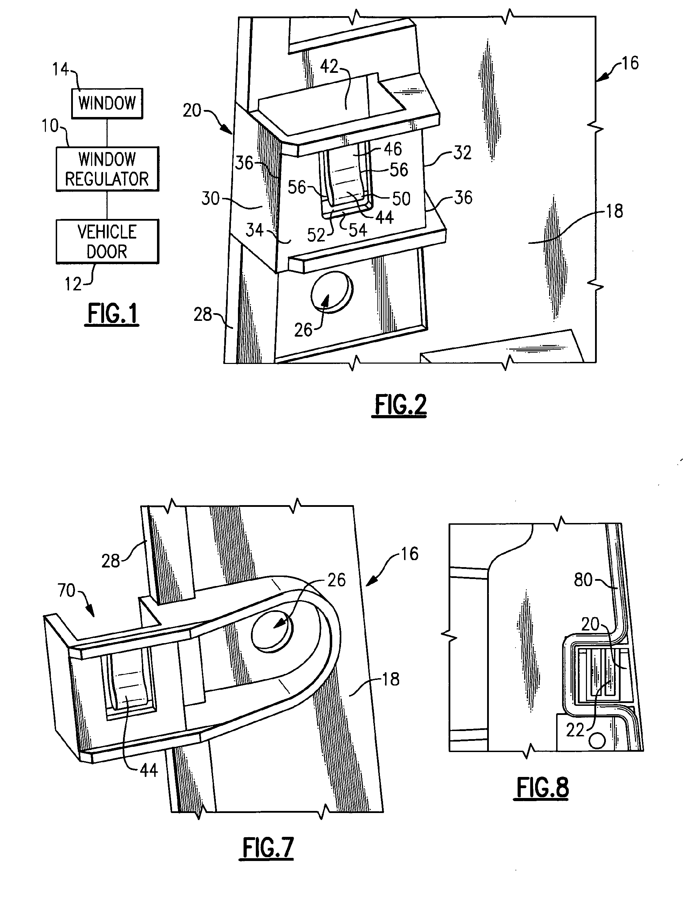

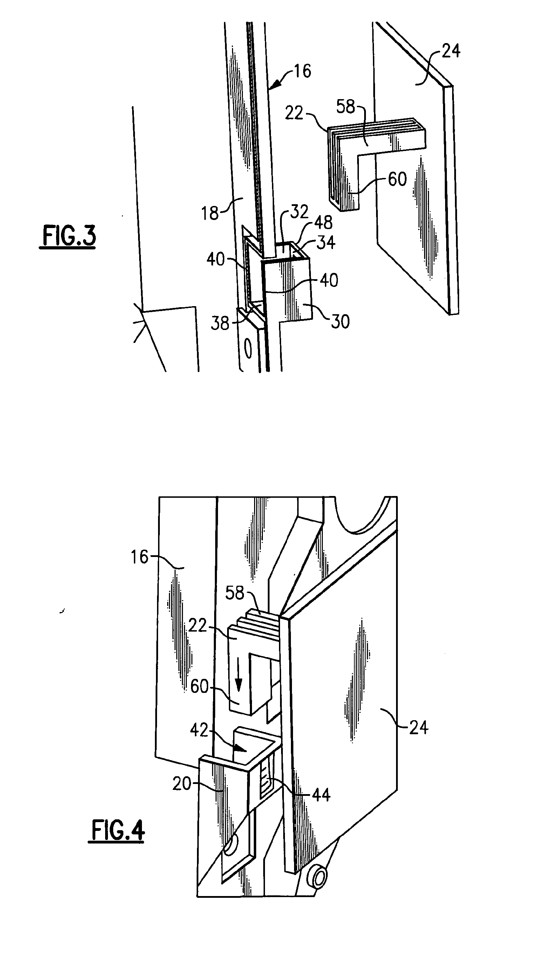

As schematically shown in Figure 1, a window regulator assembly 10 is associated with a vehicle door 12 to move a window 14 between an open position and a closed position. The window regulator assembly 10 is comprised of many different window regulator components. The operation of these window regulator components is well known and will not be discussed in detail. The window regulator assembly 10 includes a carrier plate 16 (Figure 2) that provides support for the window regulator components.

The carrier plate 16 includes a plate body 18 with structure to mount different window regulator components as known. The plate body 18 is defined by an outer edge 28 that extends about an outer perimeter of the carrier plate 16.

A trim receiver 20 is formed within the carrier plate 16 to receive a trim connector 22 that is supported on a piece of door trim 24 (see Figure 3). Preferably, the trim receiver 20 and the carrier plate 16 are formed together as a single piece from a common material, such as plastic for example; however, other materials could also be used. The carrier plate 16 is mounted to a door structure in the vehicle door 12 through at least one connection interface 26.

As shown in Figures 2-3, the trim receiver 20 includes a first side wall 30, a second side wall 32 that is spaced apart form the first side wall 30, and a front wall 34 that connects first edges 36 of the first 30 and second 32 side walls. A bottom or base wall 38 is attached to bottom edges of the first 30 and second 32 side walls, and the front wall 34. Thus, the first 30 and second 32 side walls, the front wall 34, and the base wall 38 cooperate to form a box-shaped member having an open top and open back. The box-shaped member defines an internal cavity 42 that receives the trim connector 22.

The trim receiver 20 includes an anti-rattle member 44 that is formed within the front wall 34, and which cooperates with the trim connector 22 to reduce rattling noises within the vehicle door 12. The anti-rattle member 44 includes base end 46 that is formed with a top edge 48 of the front wall 34. The base end 46 extends to a distal end 50 that is unsupported such that a gap 52 is formed between the distal end 50 and a lower edge 54 of the front wall 34. Also, gaps 56 are formed within the front wall 34 along edges of the anti-rattle member 44. This configuration allows the anti-rattle member to flex during installation of the trim connector 22, which will be discussed in greater detail below.

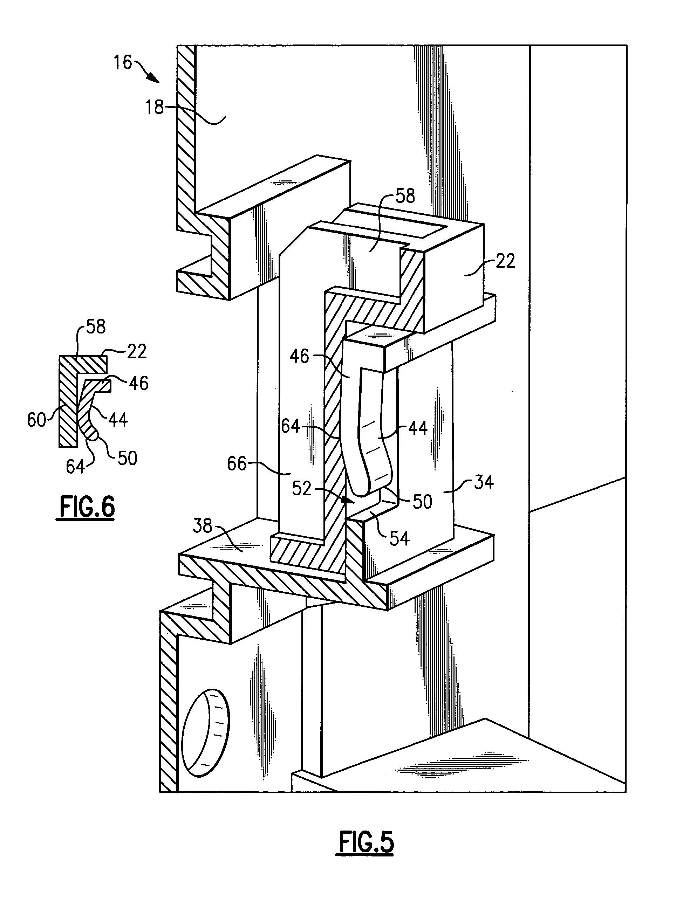

As shown in Figures 3-4, the trim connector 22 comprises a hook member that has a first leg 58 and a second leg 60 that extends transversely relative to the first leg 58. In the example shown, the first leg 58 extends in a generally horizontal direction and the second leg 60 extends in a generally vertical direction. This allows the door trim 24 to be easily installed directly onto the carrier plate 16 by positioning the door trim 24 such that the second leg 60 is positioned vertically above the internal cavity 42 of the trim receiver 20 (see Figure 4). The door trim 24 is attached to the carrier plate 16 by inserting the second leg 60 downwardly into the trim receiver 20.

Once the trim connector 22 is installed within the trim receiver 20, as shown in Figure 5, the anti-rattle member 44 directly engages the trim connector 22. As best seen in Figure 6, the anti-rattle member 44 preferably includes a curved or arcuate surface 64 that extends from the base end 46 to the distal end 50. When the trim connector 22 is inserted into the trim receiver 20, the anti-rattle member 44 is moved from an initial position (Figure 2) to a loaded position (Figures 5-6) with a force being exerted against the trim connector 22 along at least a portion of the arcuate surface 64. This reduces rattling noises at the connection interface between the door trim 24 and carrier plate 16.

A seal 80, shown in Figure 8, is mounted to the carrier plate 16 to provide a sealed interface around the opening created by forming the trim receiver 20 in the carrier plate 16. The seal 80 extends circumferentially around outer peripheral edges of the trim receiver as shown. Thus, the carrier plate 16 continues to serve as a water-tight barrier.

Figure 7 shows an alternate embodiment with a trim receiver 70 that extends outwardly of the outer edge 28 of the carrier plate 16. This trim receiver 70 is similarly shaped and operates in the same manner as that explained above with regard to Figures 2-6.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A carrier plate for a vehicle door comprising :
a plate body adapted to support at least one window regulator component; and
a trim receiver formed as part of said plate body wherein said trim receiver cooperates with a door trim connector to secure a piece of door trim to said plate body.

2. The carrier plate according to claim 1 wherein said plate body and said trim receiver are integrally formed together as one-piece from a plastic material.

3. The carrier plate according to claim 1 or 2 wherein said plate body is defined by a boundary that extends about an outer perimeter of said plate body, and wherein said trim receiver is positioned within said boundary such that said trim receiver does not extend beyond an outer edge of said plate body.

4. The carrier plate according to claim 1 or 2 wherein said plate body is defined by a boundary that extends about an outer perimeter of said plate body, and wherein said trim receiver is positioned in an area that extends outside of said boundary such that said trim receiver extends outwardly from an outer edge of said plate body.

5. The carrier plate according to any preceding claim wherein said trim receiver includes an anti-rattle member that cooperates with the door trim connector to reduce noise.

6. The carrier plate according to claim 5 wherein said trim receiver comprises a pair of side walls spaced apart from each other, said pair of side walls each including a first edge and a second edge, and wherein said first edges are connected to each other by a first wall including said anti-rattle member.

7. The carrier plate according to claim 6 including a base wall connected to said pair of side walls and said first wall.

8. The carrier plate according to claim 5 wherein said anti-rattle member comprises a curved finger portion extending from a base end that is attached to said trim receiver to a distal end that is unsupported.

9. A window regulator assembly for a vehicle door comprising:
at least one window regulator component adapted to move a window between an open and closed position;
a carrier plate that supports said at least one window regulator component; and
a trim receiver integrally formed as one-piece with said carrier plate to receive a door trim connector to secure a piece of door trim to said carrier plate.

10. The window regulator assembly according to claim 9 wherein said carrier plate and said trim receiver are formed from a plastic material.

11. The window regulator assembly according to claim 9 or 10 wherein said trim receiver includes an anti-rattle member that directly engages said door trim connector to reduce noise.

12. The window regulator assembly according to claim 11 wherein said door trim connector comprises a hook having a short leg that is attached to the piece of door trim and a long leg that is inserted into said trim receiver, and wherein said long leg extends in a direction that is generally parallel to a direction defined by a length of said anti-rattle member.

13. The window regulator assembly according to claim 9 or 10 wherein said trim receiver is comprised of first and second side walls spaced apart from each other, a front wall that connects said first and second side walls to each other along one edge, and a base wall that is connected to said first and second side walls and said front wall to form a box-shaped cavity having an open top face and an open back face.

14. The window regulator assembly according to claim 13 including an anti-rattle member that is formed within said front wall, said anti-rattle member comprising a finger that extends from a base end to an unsupported distal end.

15. The window regulator assembly according to claim 14 wherein said anti-rattle member comprises a curved surface that engages said door trim connector when said door trim connector is inserted into said box-shaped cavity.

16. A method for attaching a vehicle door trim to a carrier plate in a window regulator assembly comprising the steps of:
(a) integrally forming a carrier plate and a trim receiver as a single piece;
(b) providing a door trim connector on a piece of door trim; and
(c) inserting the door trim connector into the trim receiver to attach the piece of door trim directly to the carrier plate.

17. The method according to claim 16 including supporting at least one window regulator component on the carrier plate to move a vehicle window between open and closed positions.

18. The method according to claim 16 or 17 including the step of resiliently engaging the door trim connector with an anti-rattle member formed as part of the trim receiver to reduce noise.
